# EUROPEAN PATENT SPECIFICATION

(11) **EP 2 285 918 B1**
(45) Date of publication and mention of the grant of the patent: **01.08.2012**
(21) Application number: 09751646.2
(22) Date of filing: 22.05.2009
(51) Int. Cl.: C09D 11/00, C08G 18/08, C08G 18/12, C08G 18/32, C08G 18/48, C08G 18/66, C08G 18/75, C08G 18/76

(54) **INKJET INK WITH SELF DISPERSED PIGMENTS AND POLYURETHANE INK ADDITIVES**
TINTENSTRAHL MT SELBSTDISPERGIERTEN PIGMENTEN SOWIE POLYURETHANTINTENZUSÄTZEN
ENCRES POUR IMPRESSION À JET D'ENCRE DANS LESQUELLES DES PIGMENTS SONT AUTO-DISPERSÉS ET ADDITIFS DE POLYURÉTHANE POUR ENCRES

(30) Priority: 23.05.2008 US 128647 P
(43) Date of publication of application: 23.02.2011
(73) Proprietor: E. I. du Pont de Nemours and Company, Wilmington, DE 19898 (US)
(72) Inventor: SPINELLI, Harry, Joseph, Wilmington, DE 19802 (US); ROBERTS, C., Chad, Wilmington, DE 19808 (US); MCINTYRE, Patrick, F., West Chester, PA 19302 (US); WOLFE, Michael, Stephen, Wilmington, DE 19803 (US); ANTON, Waifong, Liew, Wilmington, DE 19803 (US)
(74) Representative: Matthews, Derek Peter
(86) International application number: PCT/US2009/044968
(87) International publication number: WO 2009/143418

(56) References cited:
- EP-A- 1 454 968
- US-A1- 2005 182 154

## Description

### CROSS-REFERENCE TO RELATED APPLICATION

This application claims priority under 35 U.S.C. §119 from U.S. Provisional Application Serial No. 61/126847, filed May 23, 2008.

### BACKGROUND OF THE INVENTION

This invention pertains to an inkjet ink, in particular to an aqueous inkjet ink comprising self-dispersible pigment and selected polyurethanes ink additives and to methods of using same.

Pigments suitable for aqueous inkjet inks are in general well-known in the art. Traditionally, pigments were stabilized by dispersing agents, such as polymeric dispersants or surfactants, to produce a stable dispersion of the pigment in the vehicle. More recently "self-dispersible" or "self-dispersing" pigments (hereafter "SDP") have been developed. SDPs are dispersible in water without dispersants.

SDPs are often advantageous over traditional dispersant stabilized pigments due to greater stability and lower viscosity at the same pigment loading. This can provide greater formulation latitude in final ink.

Prints made with SDP ink, however, tend to be susceptible to rub off and poor highlighter resistance. The combination of SDP and dispersant stabilized pigment to improve image properties is taught in EP1158030 which shows the use of a CABOJET™ 200 results in poor performance to highlighter resistance. In EP1114851 a sulfonated C.I. Pigment Red 122 is shown to have poor rubbing/scratch resistance when a highlighter pen was rubbed over the printed characters.

Polyurethanes have been described as ink additives in US 7,176,248 and US20050176848. However, neither describes the combination of SDP and the urea terminated polyurethanes derived from alpha-omega diols and/or polyether diols.

While inks based on aqueous dispersions with polyurethane additives have provided improved ink jet inks for many aspects of ink jet printing, a need still exists for improved inkjet ink formulations of SDPs that provide good print quality and good jettability. The present invention satisfies this need by providing compositions having improved optical density, chroma, gloss, and distinctness of image (DOI) while maintaining other aspects of the ink, dispersion stability, long nozzle life and the like.

### SUMMARY OF THE INVENTION

An embodiment of the invention provides the addition of a urea terminated polyurethane derived from alpha-omega diols and/or polyether diols to an aqueous ink comprising SDP colorant to provide improved fastness of the printed image without compromising jetting performance.

A further, embodiment provides improving the jetting performance of an ink comprising an SDP by the adding a urea terminated polyurethane derived from alpha-omega diols and/or polyether diols.

An embodiment provides an aqueous inkjet ink composition comprising:
(a) an SDP colorant;
(b) an aqueous vehicle; and
(c) urea terminated polyurethanes derived from alpha-omega diols and/or polyether diols, which comprises at least one compound of the general Structure (I) 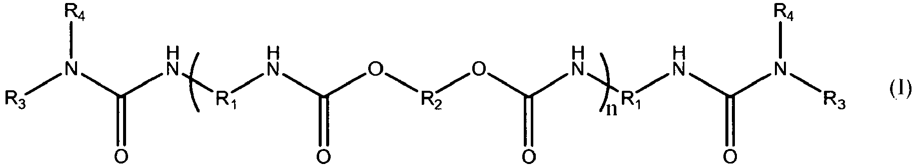 R₁ is alkyl, substituted alkyl, substituted alkyl/aryl from a diisocyanate,
   R₂ is alkyl, substituted/branched alkyl from a diol,
   R₃ is alkyl, a non-isocyanate reactive substituted, or branched alkyl from the amine terminating group;
   R₄ is hydrogen, alkyl, a non-isocyanate reactive substituted, or branched alkyl from the amine terminating group;
   n is 2 to 30;
   and where R₂ is Z₁ or Z₂ and at least one Z₁ and at least one Z₂ must be present in the polyurethane composition;

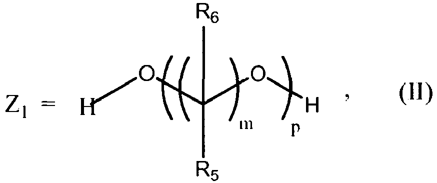

p is greater than or equal to 1,
when p is 1, m is greater than or equal to 3 to about 30,
when p is 2 or greater, m is greater than or equal to 3 to about 12;
R₅, R₆ each is independently selected from the group consisting of hydrogen, alkyl, substituted alkyl, and aryl; where the R₅ is the same or different for substituted methylene group where R₅ and R₅ or R₆ can be joined to form a cyclic structure;
Z₂ is a diol substituted with an ionic group;
wherein the urea content of the urea terminated polyurethanes ink additive is at least 2 wt % of the polyurethane resin.

A further embodiment wherein the ink jet ink may optionally contain other additives and adjuvants well-known to those of ordinary skill in the art.

A further embodiment wherein the SDP colorant is a carbon black SDP colorant.

Within yet another embodiment an aqueous pigmented ink jet ink comprising an SDP with a polyurethane ink additive, having from about 0.05 to about 10 wt% polyurethane ink additive based on the total weight of the ink, having from about 0.1 to about 10 wt% pigment based on the total weight of the ink, a surface tension in the range of about 20 dyne/cm to about 70 dyne/cm at 25°C, and a viscosity of lower than about 30 cP at 25°C.

Another embodiment provides an inkjet ink set for color printing, comprising at least three differently colored inks (such as CMY), and preferably at least four differently colored inks (such as CMYK), wherein at least one of the inks is an aqueous inkjet ink.

Yet another embodiment provides the combination of self dispersed pigments and the selected polyurethane Ink additives to produce inks such that when images are printed, the images have optical densities which are improved over self dispersed pigments, and significantly improved gloss and distinctness of image, are also more smear resistant and more durable. These improvements enable the success of ink jet inks in making high color images, especially for photo printing.

The ink sets in accordance with the present invention comprises at least three differently colored inks (such as CMY), and preferably at least four differently colored inks (such as CMYK), wherein at least one of the inks is an aqueous inkjet ink comprising:
(a) an SDP colorant;
(b) an aqueous vehicle; and
(c) urea terminated polyurethanes derived from alpha-omega diols and/or polyether diols as set forth above.

As indicated above, preferably the ink set comprises at least 4 different colored inks (CMYK), wherein the black (K) ink comprises:
(a) a black SDP colorant;
(b) an aqueous vehicle; and
(c) urea terminated polyurethanes derived from alpha-omega diols and/or polyether diols as set forth above.

The other inks of the ink set are preferably also aqueous inks, and may contain dyes, pigments or combinations thereof as the colorant. Such other inks are, in a general sense, well known to those of ordinary skill in the art. These and other features and advantages of the present invention will be more readily understood by those of ordinary skill in the art from a reading of the following Detailed Description. Certain features of the invention which are, for clarity, described above and below as a separate embodiments, may also be provided in combination in a single embodiment. Conversely, various features of the invention that are described in the context of a single embodiment, may also be provided separately or in any subcombination

### DETAILED DESCRIPTION

Unless otherwise stated or defined, all technical and scientific terms used herein have commonly understood meanings by one of ordinary skill in the art to which this invention pertains.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

When the term "about" is used in describing a value or an end-point of a range, the disclosure should be understood to include the specific value or end-point referred to.

As used herein, reference to enhanced or improved "print quality" means some aspect of optical density, gloss, and Distinctness of Image (DOI) of the printed images and fastness (resistance to ink removal from the printed image) is increased, including, for example, rub fastness (finger rub), water fastness (water drop) and smear fastness (highlighter pen stroke).

As used herein, the term "SDP" means a self-dispersible" or "self-dispersing" pigments

As used herein, the term "dispersion" means a two phase system where one phase consists of finely divided particles (often in the colloidal size range) distributed throughout a bulk substance, the particles being the dispersed or internal phase and the bulk substance the continuous or external phase.

As used herein, the term "dispersant" means a surface active agent added to a suspending medium to promote uniform and maximum separation of extremely fine solid particles often of colloidal size. For pigments the dispersants are most often polymeric dispersants and usually the dispersants and pigments are combined using dispersing equipment.

As used herein, the term "OD" means optical density.

As used herein, the term "Gloss" means observation of reflected light from a printed surface, normally the printed substrate is glossy paper

As used herein, the term "Distinctness of Image (DOI)" means an aspect of gloss characterized by the sharpness of the image of objects produced by reflection as a surface, here a printed glossy paper.

As used herein, the term "degree of functionalization" refers to the amount of hydrophilic groups present on the surface of the SDP per unit surface area, measured in accordance with the method described further herein.

As used herein, the term "aqueous vehicle" refers to water or a mixture of water and at least one water-soluble organic solvent (co-solvent).

As used herein, the tem "ionizable groups", means potentially ionic groups.

As used herein, the term "substantially" means being of considerable degree, almost all.

As used herein, the term "Mn" means number average molecular weight.

As used herein, the term "Mw" means weight average molecular weight.

As used herein, the term "Pd" means the polydispersity which is the weight average molecular weight divided by the number average molecular weight.

As used herein, the term "d50" means the particle size at which 50 % of the particles are smaller; "d95" means the particle size at which 95 % of the particles are smaller.

As used herein, the term "cP" means centipoise, a viscosity unit.

As used herein, the term "pre-polymer" means the polymer that is an intermediate in a polymerization process, and can be also be considered a polymer.

As used herein, the term "AN" means acid number, mg KOH/gram of solid polymer.

As used herein, the term ""neutralizing agents" means to embrace all types of agents that are useful for converting ionizable groups to the more hydrophilic ionic (salt) groups.

As used herein, the term "PUD" means the polyurethanes dispersions described herein.

As used herein, the term "BMEA" means bis (methoxyethyl) amine.

As used herein, the term "DBTL" means dibutyltin dilaurate.

As used herein, the term "DMEA" means dimethylethanolamine.

As used herein, the term "DMIPA" means dimethylisopropylamine.

As used herein, the term "DMPA" means dimethylol propionic acid.

As used herein, the term "DMBA" means dimethylol butyric acid.

As used herein, the term "EDA" means ethylenediamine.

As used herein, the term "EDTA" means ethylenediaminetetraacetic acid.

As used herein, the term "HDI" means 1, 6-hexamethylene diisocyanate.

As used herein, the term "GPC" means gel permeation chromatography.

As used herein, the term "IPDI" means isophorone diisocyanate.

As used herein, the term "TMDI" means trimethylhexamethylene diisocyanate.

As used herein, the term "TMXDI" means m-tetramethylene xylylene diisocyanate.

As used herein, the term "ETEGMA//BZMA//MAA" means the block copolymer of ethoxytriethyleneglycol methacrylate, benzylmethacrylate and methacrylic acid.

As used herein the term T650 means TERATHANE® 650; see below.

As used herein, the term "PO3G" means 1, 3-propanediol.

As used herein, the term"DMPA" means dimethylol propionic acid.

As used herein, the term "NMP" means n-Methyl pyrolidone.

As used herein, the term "TEA" means triethylamine.

As used herein, the term "TEOA" means triethanolamine.

As used herein, the term "TETA" means triethylenetetramine.

As used herein, the term "THF" means tetrahydrofuran.

As used herein, the term "Tetraglyme" means Tetraethylene glycol dimethyl ether.

Unless otherwise noted, the above chemicals were obtained from Aldrich (Milwaukee, WI) or other similar suppliers of laboratory chemicals.

TERATHANE 650 is a 650 molecular weight, polytetramethylene ether glycol (PTMEG) from purchased from Invista, Wichita, KS.

TERATHANE 250 is a 250 molecular weight, polytetramethylene ether glycol.

The materials, methods, and examples herein are illustrative only and, except as explicitly stated, are not intended to be limiting.

### Colorant

The pigment colorants of the present invention are specifically self-dispersing pigments. SDPs are surface modified with dispersibility imparting groups to allow stable dispersion without the need for a separate dispersant. For dispersion in an aqueous vehicle, the surface modification involves addition of hydrophilic groups, more specifically, ionizable hydrophilic groups. Methods of making SDPs are well known and can be found for example in US5554739 and US6852156.

The SDP colorant can be further characterized according to its ionic character. Anionic SDP yields, in an aqueous medium, particles with anionic surface charge. Conversely, cationic SDP yields, in an aqueous medium, particles with cationic surface charge. Particle surface charge can be imparted, for example, by attaching groups with anionic or cationic moieties to the particle surface. The SDP of the present invention are preferably, although not necessarily, anionic.

Anionic moieties attached to the anionic SDP surface can be any suitable anionic moiety but are preferably compounds (A) or (B) as depicted below:

—CO₂Y (A) —SO₃Y (B)

where Y is selected from the group consisting of conjugate acids of organic bases; alkali metal ions; "onium" ions such as ammonium, phosphonium and sulfonium ions; and substituted "onium" ions such as tetraalkylammonium, tetraalkyl phosphonium and trialkyl sulfonium ions; or any other suitable cationic counterion. Useful anionic moieties also include phosphates and phosphonates. More preferred are type A ("carboxylate") anionic moieties which are described, for example, in US5571311, US5609671 and US6852156; Alternatively sulfonated (type B) SDPs may be used and have been described, for example, in US5571331, US5928419 and EP-A-1146090.

Small colorant particles should be used for maximum color strength and good jetting. The particle size may generally be in the range of from about 0.005 microns to about 15 microns; more specifically, in the range of from about 0.005 to about 1 micron, more specifically from about 0.005 to about 0.5 micron, and more specifically, in the range of from about 0.01 to about 0.3 micron.

The levels of SDPs employed in the inks instant invention are those levels needed to impart the desired optical density to the printed image. SDP levels may be in the range of about 0.01 to about 10% by weight of the ink.

The SDPs may be black, such as those based on carbon black, or may be colored pigments such as those based on the American Association of Textile Chemists and Colorists Color Index pigments such as Pigment Blue PB15:3 and PB15:4 cyan, Pigment Red PR122 and PR123 magenta, and Pigment Yellow PY128 and PY74 yellow.

The SDPs used in the present invention may be prepared, for example, by grafting a functional group or a molecule containing a functional group onto the surface of the pigment, or by physical treatment (such as vacuum plasma), or by chemical treatment (for example, by oxidation with ozone, hypochlorous acid or the like). A single type or a plurality of types of hydrophilic functional groups may be bonded to one pigment particle. The type and degree of functionalization may be properly determined by taking into consideration, for example, dispersion stability in ink, color density, and drying properties at the front end of an ink jet head.

In one embodiment, the hydrophilic functional group(s) on the SDP are primarily carboxyl groups, or a combination of carboxyl and hydroxyl groups; more specifically, the hydrophilic functional groups on the SDP are directly attached and are primarily carboxyl groups, or a combination of carboxyl and hydroxyl.

Pigments having the hydrophilic functional group(s) directly attached may be produced, for example, according to methods disclosed in US6 852156 Carbon black treated by the method have a high surface-active hydrogen content which is base neutralized to provide stable dispersions in water. The preferred oxidant is ozone.

The SDPs of the present invention may have a degree of functionalization wherein the density of anionic groups is less than about 3.5 µmoles per square meter of pigment surface (3.5 µmol/m²), and more specifically, less than about 3.0 µmol/m². Degrees of functionalization of less than about 1.8 µmol/m², and more specifically, less than about 1.5 µmol/m², are also suitable and may be preferred for certain specific types of SDPs.

The colorant in the ink of the present invention may comprises only SDP. If other pigment colorant is present as dispersant-stabilized pigment, the dispersant may be a structured or random polymer. Furthermore, when dispersant-stabilized pigment with structured polymer is present, the structured dispersant and the soluble structured polymer for the SDP are alternatively the same polymer.

### Aqueous Vehicle

Selection of a suitable aqueous vehicle mixture depends on requirements of the specific application, such as desired surface tension and viscosity, the selected colorant, drying time of the ink, and the type of substrate onto which the ink will be printed. Representative examples of water-soluble organic solvents which may be utilized in the present invention are those that are disclosed in US5085698.

If a mixture of water and a water-soluble solvent is used, the aqueous vehicle typically will contain about 30% to about 95% water with the balance (i.e., about 70% to about 5%) being the water-soluble solvent. Compositions of the present invention may contain about 60% to about 95% water, based on the total weight of the aqueous vehicle.

The amount of aqueous vehicle in the ink is typically in the range of about 70% to about 99.8%, specifically about 80% to about 99.8%, based on total weight of the ink.

The aqueous vehicle can be made to be fast penetrating (rapid drying) by including surfactants or penetrating agents such as glycol ethers and 1,2-alkanediols. Suitable surfactants include ethoxylated acetylene diols (e.g. Surfynols® series from Air Products), ethoxylated primary (e.g. Neodol® series from Shell) and secondary (e.g. Tergitol® series from Union Carbide) alcohols, sulfosuccinates (e.g. Aerosol® series from Cytec), organosilicones (e.g. Silwet® series from Witco) and fluoro surfactants (e.g. Zonyl® series from DuPont).

The amount of glycol ether(s) and 1,2-alkanediol(s) added must be properly determined, but is typically in the range of from about 1 to about 15% by weight and more typically about 2 to about 10% by weight, based on the total weight of the ink. Surfactants may be used, typically in the amount of about 0.01 to about 5% and preferably about 0.2 to about 2%, based on the total weight of the ink.

### Urea terminated Polyurethanes Additives

The polyurethane ink additive are urea terminated polyurethanes of general Structure (I) 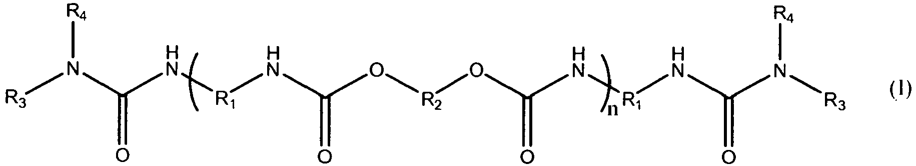
R₁ is alkyl, substituted alkyl, substituted alkyl/aryl from a diisocyanate,
R₂ is alkyl, substituted/branched alkyl from a diol,
R₃ is alkyl, a non-isocyanate reactive substituted, or branched alkyl from the amine terminating group;
R₄ is hydrogen, alkyl, a non-isocyanate reactive substituted, or branched alkyl from the amine terminating group;
n is 2 to 30;
and where R₂ is Z₁ or Z₂ and at least one Z₁ and at least one Z₂ must be present in the polyurethane composition; 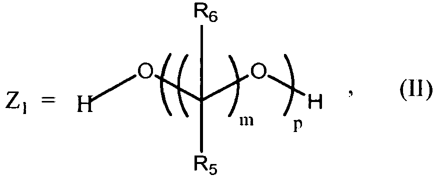
   p is greater than or equal to 1,
   when p is 1, m is greater than or equal to 3 to about 30,
   when p is 2 or greater, m is greater than or equal to 3 to about 12;
   R₅, R₆ each is independently selected from the group consisting of hydrogen, alkyl, substituted alkyl, and aryl; where the R₅ is the same or different for substituted methylene group where the R₅ and R₅ or R₆ can be joined to form a cyclic structure;
   Z₂ is a diol substituted with an ionic group;
   wherein the urea content of the urea terminated polyurethanes ink additive is at least 2 wt % of the polyurethane resin.
wherein the urea content of the urea terminated polyurethanes ink additive is at least 2 wt% of the polyurethane resin.

Structure (I) denotes the urea terminated polyurethanes ink additive and Structure (II) denotes the diol and polyether diol that is a building block for Structure (I). When p is 1 a diol is the primary isocyanate reactive group and when p is greater than one the diol is characterized as a polyether diol.

The first step in the preparation is the preparation is the method of preparing an aqueous dispersion of an aqueous polyurethane composition of urea terminated polyurethanes comprising the steps:
(a) providing reactants comprising (i) at least one diol or polyether diol Z₁ component comprising a diol , (ii) at least one polyisocyanate component comprising a diisocyanate, and (iii) at least one hydrophilic reactant comprising at least one isocyanate reactive ingredient containing an ionic group, Z₂,
(b) reacting (i), (ii) and (iii) in the presence of a water-miscible organic solvent to form an isocyanate-functional polyurethane pre-polymer;
(c) adding water to form an aqueous dispersion; and
(d) prior to, concurrently with or subsequent to step (c), chain-terminating the isocyanate-functional pre-polymer with a primary or secondary amine.

The chain terminating amine is typically added prior to addition of water in an amount to react with substantially any remaining isocyanate functionality. The chain terminating amine is preferably a nonionic secondary amine.

If the hydrophilic reactant contains ionizable groups then, at the time of addition of water (step (c)), the ionizable groups may be ionized by adding acid or base (depending on the type of ionizable group) in an amount such that the polyurethane can be stably dispersed. This neutralization can occur at any convenient time during the preparation of the polyurethane.

At some point during the reaction (generally after addition of water and after chain termination), the organic solvent is substantially removed under vacuum to produce an essentially solvent-free dispersion.

It should be understood that the process used to prepare the polyurethane generally results in a urea-terminated polyurethane polymer of the above structure being present in the final product. However, the final product will typically be a mixture of products, of which a portion is the above urea terminated polyurethanes polymer, the other portion being a normal distribution of other polymer products and may contain varying ratios of unreacted monomers. The heterogeneity of the resultant polymer will depend on the reactants selected as well as reactant conditions chosen.

### Diol and Polyether Diol Component of the Urea Terminated Polyurethane Ink Additive

The diol component {Z₁} can either be based on alpha, omega dialcohol or diols (p=1) with at least at least 3 methylene group and less than or equal to 30 methylene groups (m=3 to about 30) or a polyether diol (p is greater than 1) with 3 to 12 methylene groups (m=3 to about 12). The diol and polyether diol can be used separately or in mixtures. The amount of diol: polyether diol ranges from 0:100 to 100:0. The preferred number of methylene groups for the diol and polyetherdiol is at least 3 but less than about 25.

In one embodiment, the diol and/or polyether diol shown in Structure (II) may be blended with other oligomeric and/or polymer polyfunctional isocyanate-reactive compounds such as, for example, polyols, polyamines, polythiols, polythioamines, polyhydroxythiols and polyhydroxylamines. When blended, it is preferred to use difunctional components and, more preferably, one or more diols including, for example, polyether diols, polyester diols, polycarbonate diols, polyacrylate diols, polyolefin diols and silicone diols.

When p is greater than 1 the polyether diol shown in Structure (II) are oligomers and polymers in which at least 50% of the repeating units have 3 to 12 methylene groups in the ether chemical groups. More specifically, from about 75% to 100%, still more specifically, from about 90% to 100%, and even more specifically, from about 99% to 100%, of the repeating units are 3 to 12 methylene groups in the ether chemical groups (in Structure (II) m = 3-12). A preferred number of methylene groups is 3 or 4. The polyether diol shown in Structure (II) can be prepared by polycondensation of monomers comprising alpha, omega diols where m= 3 -12 resulting in polymers or copolymers containing the structural linkage shown above. As indicated above, at least 50% of the repeating units are 3 to 12 methylene ether units.

The oligomers and polymers based on the polyether diol {where p is greater than 1} shown in Structure (II), has from 2 to about 50 of the polyether diols shown in Structure (II), repeating unit, more specifically, about 5 to about 20 polyether diols shown in Structure (II). Where p denotes the number of repeating groups. R₅ and R₆ are hydrogen, alkyl, substituted alkyl, aryl; where the R₅ is the same or different with each substituted methylene group and where R₅ and R₅ and R₆ can be joined to form a cyclic structure. The substituted alkyl preferably do not contain isocyanate reactive groups except as described below. In general, the substituted alkyls are intended to be inert during the polyurethane preparation.

In addition to the 3 to 12 methylene ether units, lesser amounts of other units, such as other polyalkylene ether repeating units derived from ethylene oxide and propylene oxide may be present. The amount of the ethylene glycols and 1.2-propylene glycols which are derived from epoxides such as ethylene oxide, propylene oxide, butylene oxide, etc are limited to less than 10 % of the total polyether diol weight. A polyether diol may be derived from 1, 3-propanediol, (PO3G). The employed PO3G may be obtained by any of the various well known chemical routes or by biochemical transformation routes. The 1, 3-propanediol may be obtained biochemically from a renewable source ("biologically-derived" 1, 3-propanediol). For the diol of Structure (II) (p = 1) the biochemically derived material described above may be 1, 3-propanediol.

The starting material for making the diol will depend on the desired polyether diol of Structure (II) (p is greater than 1), availability of starting materials, catalysts, equipment, etc., and comprises "1, 3 to 1, 12-diol reactant." "1, 3 to 1, 12-diol reactant" means 1, 3 to 1, 12-diol, and oligomers and pre-polymers of 1, 3 to 1, 10-diol preferably having a degree of polymerization of 2 to 50, and mixtures thereof. In some instances, it may be desirable to use up to 10% or more of low molecular weight oligomers where they are available. Thus, preferably the starting material comprises 1, 3 to 1, 10-diol and the dimer and trimer thereof. An particular embodiment of starting material is comprised of about 90% by weight or more 1,3 to 1,10-diol , and more specifically, 99% by weight or more 1,3 to 1,10-diol , based on the weight of the 1,3 to 1,10-diol reactant.

As indicated above, the polyether diol shown in Structure (II) (p greater than 1) may contain lesser amounts of other polyalkylene ether repeating units in addition to the 3-12 methylene ether units. The monomers for use in preparing poly(3-12)methylene ether glycol can, therefore, contain up to 50% by weight (specifically, about 20 wt% or less, more specifically, about 10 wt% or less, and still more specifically, about 2 wt% or less), of comonomer diols in addition to the 1,3-propanediol reactant. Comonomer diols that are suitable for use in the process include aliphatic diols, for example, ethylene glycol, 1,6-hexanediol, 1,8-octanediol,; cycloaliphatic diols, for example, 1,4-cyclohexanediol, 1,4-cyclohexanedimethanol; and polyhydroxy compounds, for example, glycerol, trimethylolpropane, and pentaerythritol. The polyether diol shown in Structure (II) useful in practicing this invention can contain small amounts of other repeat units, for example, from aliphatic or aromatic diacids or diesters, This type of the polyether diol shown in Structure (II) can also be called a "random polymethylene ether ester", and can be prepared by polycondensation of 1,3 to 1,12-diol reactant and about 10 to about 0.1 mole% of aliphatic or aromatic diacid or esters thereof, such as terephthalic acid, isophthalic acid, bibenzoic acid, naphthalic acid, 4,4'-sulfonyl dibenzoic acid, p-(hydroxyethoxy)benzoic acid, and combinations thereof, and dimethyl terephthalate, bibenzoate, isophthlate, naphthalate and phthalate; and combinations thereof. Of these, terephthalic acid, dimethyl terephthalate and dimethyl isophthalate are preferred.

When the polyether diol shown in Structure (II) (p is greater than 1) is used for the diol of the invention a number average molecular weight (Mn) may be in the range of about 200 to about 5000, and more specifically from about 240 to about 3600. Blends of the polyether diol shown in Structure (II) can also be used. For example, the polyether diol shown in Structure (II) can comprise a blend of a higher and a lower molecular weight, the polyether diol shown in Structure (II) where the higher molecular weight polyether diol shown in Structure (II) has a number average molecular weight of from about 1000 to about 5000, and the lower molecular weight polyether diol shown in Structure (II) has a number average molecular weight of from about 200 to about 750. The Mn of the blended polyether diol shown in Structure (II) may still be in the range of from about 250 to about 3600. The polyether diol shown in Structure (II) preferred for use herein are typically polydisperse polymers having a polydispersity (i.e. Mw/Mn) of preferably from about 1.0 to about 2.2, more specifically, from about 1.2 to about 2.2, and still more specifically, from about 1.5 to about 2.1. The polydispersity can be adjusted by using blends of the polyether diol shown in Structure (II).

The polyether diol shown in Structure (II) for use in the present invention preferably has a color value of less than about 100 APHA, and more specifically, less than about 50 APHA.

### Other Isocyanate-Reactive Components

As indicated above, the polyether diol shown in Structure (II) may be blended with other polyfunctional isocyanate-reactive components, most notably oligomeric and/or polymeric polyols.

Suitable other diols contain at least two hydroxyl groups, and have a molecular weight of from about 60 to about 6000. Of these, the polymeric other diols are best defined by the number average molecular weight, and can range from about 200 to about 6000, specifically, from about 400 to about 3000, and more specifically from about 600 to about 2500. The molecular weights can be determined by hydroxyl group analysis (OH number).

Examples of polymeric polyols include polyesters, polyethers, polycarbonates, polyacetals, poly(meth)acrylates, polyester amides, polythioethers and mixed polymers such as a polyester-polycarbonates where both ester and carbonate linkages are found in the same polymer. A combination of these polymers can also be used. For examples, a polyester polyol and a poly (meth) acrylate polyol may be used in the same polyurethane synthesis.

Suitable polyester polyols include reaction products of polyhydric, specifically, dihydric alcohols to which trihydric alcohols may optionally be added, and polybasic (preferably dibasic) carboxylic acids.

The polycarboxylic acids may be aliphatic, cycloaliphatic, aromatic and/or heterocyclic or mixtures thereof and they may be substituted, for example, by halogen atoms, and/or unsaturated.

Suitable polyether polyols that can be used in addition to the polyether diols of Structure (II) are obtained in a known manner by reacting the starting compounds that contain reactive hydrogen atoms with alkylene oxides such as ethylene oxide, propylene oxide, butylene oxide, styrene oxide, tetrahydrofuran, epichlorohydrin or mixtures of these. The polyethers may not contain more than about 10% by weight of ethylene oxide units. More preferably, polyethers obtained without the addition of ethylene oxide may be used.

In addition to the above-mentioned components, which are difunctional in the isocyanate polyaddition reaction, mono-functional and even small portions of trifunctional and higher functional components generally known in polyurethane chemistry, such as trimethylolpropane or 4-isocyanantomethyl-1,8-octamethylene diisocyanate, may be used in cases in which branching of the NCO pre-polymer or polyurethane is desired.

It is, however, preferred that the NCO-functional pre-polymers should be substantially linear, and this may be achieved by maintaining the average functionality of the pre-polymer starting components at or below 2.1.

Similar NCO reactive materials can be used as described for hydroxy containing compounds and polymers, but which contain other NCO reactive groups. Examples include dithiols, diamines, thioamines and even hydroxythiols and hydroxylamines. These can either be compounds or polymers with the molecular weights or number average molecular weights as described for the polyols.

### Polyisocyanate Component

Suitable polyisocyanates are those that contain either aromatic, cycloaliphatic or aliphatic groups bound to the isocyanate groups. Mixtures of these compounds may also be used. Preferred are compounds with isocyanates bound to a cycloaliphatic or aliphatic moieties. If aromatic isocyanates are used, cycloaliphatic or aliphatic isocyanates are preferably present as well. R₁ can be preferably substituted with aliphatic groups.

Diisocyanates are preferred, and any diisocyanate useful in preparing polyurethanes and/or polyurethane-ureas from polyether glycols, diisocyanates and diols or amine can be used in this invention.

Examples of suitable diisocyanates include, but are not limited to, 2,4-toluene diisocyanate (TDI); 2,6-toluene diisocyanate; trimethyl hexamethylene diisocyanate (TMDI); 4,4'-diphenylmethane diisocyanate (MDI); 4,4'-dicyclohexylmethane diisocyanate (H₁₂MOI); 3,3'-dimethyl-4,4'-biphenyl diisocyanate (TODI); Dodecane diisocyanate (C₁₂DI); m-tetramethylene xylylene diisocyanate (TMXDI); 1,4-benzene diisocyanate; trans-cyclohexane-1,4-diisocyanate; 1,5-naphthalene diisocyanate (NDI); 1,6-hexamethylene diisocyanate (HDI); 4,6-xylyene diisocyanate; isophorone diisocyanate (IPDI); and combinations thereof. IPDI and TMXDI are preferred.

Small amounts, preferably less than about 3 wt% based on the weight of the diisocyanate, of monoisocyanates or polyisocyanates can be used in mixture with the diisocyanate. Examples of useful monoisocyanates include alkyl isocyanates such as octadecyl isocyanate and aryl isocyanates such as phenyl isocyanate. Example of a polyisocyanate are triisocyanatotoluene HDI trimer (Desmodur 3300), and polymeric MDI (Mondur MR and MRS).

### Chain Termination Reactant for the Urea Terminated Polyurethanes Additive

The terminating agent is a primary or secondary monoamine which is added to make the urea termination. In Structure (I) the terminating agent is shown as R₃ (R₄) N- substituent on the polyurethane. The substitution for R₃ and R₄ include hydrogen, alkyl, a substituted/branched alkyl, isocyanate reactive where the substituent can be a isocyanate reactive group selected from hydroxyl, carboxyl, mercapto, amido and other ones which have less isocyanate reactivity than primary or secondary amine. At least one of the R₃ and R₄ must be other than hydrogen. R₃ and R₄ may be connected to form a cyclic compound. The cyclic compound may also have oxygen in a cyclic compound.

The amount of chain terminator employed should be approximately equivalent to the unreacted isocyanate groups in the pre-polymer. The ratio of active hydrogens from amine in the chain terminator to isocyanate groups in the pre-polymer are in the range from about 1.0:1 to about 1.2:1, more specifically, from about 1.0:1.1 to about 1.1:1, and still more specifically, from about 1.0:1.05 to about 1.1:1, on an equivalent basis. Although any isocyanate groups that are not terminated with an amine can react with other isocyanate reactive functional group and/or water the ratios of chain termination to isocyanate group is chosen to assure urea termination. Amine termination of the polyurethane is avoided by the choice and amount of chain terminating agent leading to an urea terminated polyurethane which has improved molecular weight control and improved properties as a particle dispersant.

Aliphatic primary or secondary monoamines are preferred. Example of monoamines useful as chain terminators include, but are not restricted to, butylamine, hexylamine, 2-ethylhexyl amine, dodecyl amine, diisopropanol amine, stearyl amine, dibutyl amine, dinonyl amine, bis(2-ethylhexyl) amine, diethylamine, bis(methoxyethyl)amine, N- methylstearyl amine, diethanolamine and N-methyl aniline. Other non-ionic hydrophilic secondary amines include heterocyclic structures such as morpholine and similar secondary nitrogen heterocycles. A preferred isocyanate reactive chain terminator is bis (methoxyethyl) amine (BMEA). The bis (methoxyethyl) amine is part of a preferred class of urea terminating reactant where the substituents are non reactive in the isocyanate chemistry, but are nonionic hydrophilic groups. This nonionic hydrophilic group provides the urea terminated polyether diol polyurethane with more water compatible.

Any primary or secondary monoamines substituted with less isocyanate reactive groups may be used as chain terminators. Less isocyanate reactive groups could be hydroxyl, carboxyl, amide and mercapto. Example of monoamines useful as chain terminators include but are not restricted to monoethanolamine, 3-amino-1-propanol, isopropanolamine, N-ethylethanolamine, diisopropanolamine, 6-aminocaproic acid, 8-aminocaprylic acid, 3-aminoadipic acid, and lysine. Chain terminating agents may include those with two less isocyanate reactive groups such as glutamine. A preferred isocyanate reactive chain terminator is diethanolamine. The diethanolamine is part of a preferred class of urea terminating reactant where the substituents are hydroxyl functionalities which can provide improved pigment wetting. The relative reactivity of the amine versus the less isocyanate reactive group and the mole ratios of NCO and the chain terminating amine produce the urea terminated polyurethanes.

The urea content of the urea terminated polyurethanes in weight percent of the polyurethane is determined by dividing the mass of chain terminator by the sum of the other polyurethane components including the chain terminating agent. The urea content is from about 2 wt % to about 14 wt %. The urea content is preferably from about 2.5. wt % to about 10.5 wt %. The 2 wt % occurs when the polyether diols used are large, for instance Mn is greater than about 4000 and/or the molecular weight of the isocyanate is high.

### Diol substituted with an ionic group

The Diol substituted with an ionic group contains ionic and/or ionizable groups. Preferably, these reactants will contain one or two, more preferably two, isocyanate reactive groups, as well as at least one ionic or ionizable group. In the structural description of the urea terminated polyether polyurethanes described herein the reactant containing the ionic group is designated as Z₂.

Examples of ionic dispersing groups include carboxylate groups (-COOM), phosphate groups (-OPO₃ M₂), phosphonate groups (-PO₃ M₂), sulfonate groups (-SO₃ M), quaternary ammonium groups (-NR₃ Y, wherein Y is a monovalent anion such as chlorine or hydroxyl), or any other effective ionic group. M is a cation such as a monovalent metal ion (e.g., Na⁺, K⁺, Li⁺, etc.), H⁺, NR₄⁺, and each R can be independently an alkyl, aralkyl, aryl, or hydrogen. These ionic dispersing groups are typically located pendant from the polyurethane backbone.

The ionizable groups in general correspond to the ionic groups, except they are in the acid (such as carboxyl -COOH) or base (such as primary, secondary or tertiary amine -NH₂, -NRH, or -NR₂) form. The ionizable groups are such that they are readily converted to their ionic form during the dispersion/polymer preparation process as discussed below.

The ionic or potentially ionic groups are chemically incorporated into the urea terminated polyurethanes in an amount to provide an ionic group content (with neutralization as needed) sufficient to render the polyurethane dispersible in the aqueous medium of the dispersion. Typical ionic group content will range from about 10 up to about 210 milliequivalents (meq), specifically, from about 20 to about 140 meq. per 100 g of polyurethane, and more specifically, less than about 90 meq per 100 g of urea terminated polyurethanes.

Suitable compounds for incorporating these groups include (1) monoisocyanates or diisocyanates which contain ionic and/or ionizable groups, and (2) compounds which contain both isocyanate reactive groups and ionic and/or ionizable groups. In the context of this disclosure, the term "isocyanate reactive groups" is taken to include groups well known to those of ordinary skill in the relevant art to react with isocyanates, and preferably hydroxyl, primary amino and secondary amino groups.

Examples of isocyanates that contain ionic or potentially ionic groups are sulfonated toluene diisocyanate and sulfonated diphenylmethanediisocyanate.

With respect to compounds which contain isocyanate reactive groups and ionic or potentially ionic groups, the isocyanate reactive groups are typically amino and hydroxyl groups. The potentially ionic groups or their corresponding ionic groups may be cationic or anionic, although the anionic groups are preferred. Examples of anionic groups include carboxylate and sulfonate groups. Examples of cationic groups include quaternary ammonium groups and sulfonium groups.

The neutralizing agents for converting the ionizable groups to ionic groups are described in the preceding above referenced publications, and are also discussed hereinafter.

In the case of anionic group substitution, the groups can be carboxylic acid groups, carboxylate groups, sulphonic acid groups, sulphonate groups, phosphoric acid groups and phosphonate groups. The acid salts are formed by neutralizing the corresponding acid groups either prior to, during or after formation of the NCO pre-polymer, preferably after formation of the NCO pre-polymer.

Preferred carboxylic group-containing compounds are the hydroxy-carboxylic acids corresponding to the structure (HO)ⱼQ(COOH)ₖ wherein Q represents a straight or branched, hydrocarbon radical containing 1 to 12 carbon atoms, j is 1 or 2, preferably 2 and k is 1 to 3, preferably 1 or 2 and more preferably 1.

Examples of these hydroxy-carboxylic acids include citric acid, tartaric acid and hydroxypivalic acid. Especially preferred acids are those of the above-mentioned structure wherein j=2 and k=1. These dihydroxy alkanoic acids are described in US3412054, Especially preferred dihydroxy alkanoic acids are the alpha, alpha-dimethylol alkanoic acids represented by the structural formula: 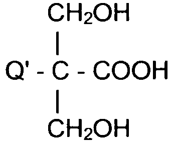 wherein Q' is hydrogen or an alkyl group containing 1 to 8 carbon atoms. The most preferred compound is alpha, alpha-dimethylol propionic acid, i.e., wherein Q' is methyl in the above formula.

In order to have a stable dispersion, a sufficient amount of the acid groups must be neutralized so that, the resulting polyurethane will remain stably dispersed in the aqueous medium. Generally, at least about 75%, preferably at least about 90%, of the acid groups are neutralized to the corresponding carboxylate salt groups.

Suitable neutralizing agents for converting the acid groups to salt groups either before, during, or after their incorporation into the NCO pre-polymers, include tertiary amines, alkali metal cations and ammonia. Preferred trialkyl substitiuted tertiary amines, such as triethyl amine, tripropyl amine, dimethylcyclohexyl amine, and dimethylethyl amine.

Neutralization may take place at any point in the process. A typical procedure includes at least some neutralization of the pre-polymer, which is then chain extended in water in the presence of additional neutralizing agent.

When the ionic stabilizing groups are acids, the acid groups are incorporated in an amount sufficient to provide an acid group content for the urea-terminated polyurethane, known by those skilled in the art as acid number {AN}(mg KOH per gram solid polymer), of at least about 6, preferably at least about 10 milligrams KOH per 1.0 gram of polyurethane and even more preferred 20 milligrams KOH per 1.0 gram of polyurethane. The upper limit for the acid number (AN) is about 120, specifically, about 90, and even more specifically, 60.

The urea terminated polyurethanes ink additive has a number average molecular weight of about 2000 to about 30,000. Preferably the molecular weight is about 3000 to 20000. These urea terminated polyurethanes can also function as polymeric dispersants. In fact, those that have formulations that when used as dispersants and produce a pigments dispersion which pass the salt stability test shown above, can be considered ISD dispersants.

Combinations of two or more polyurethane additives of which one or more are crosslinked may also be utilized in the formulation of the ink.

The polyurethane ink additive is generally stable aqueous dispersion of polyurethane particles having a solids content of up to about 60% by weight, specifically, about 15 to about 60% by weight and most specifically, about 30 to about 45% by weight. However, it is always possible to dilute the dispersions to any minimum solids content desired.

### Other Ingredients

Other ingredients may be formulated into the inkjet ink, to the extent that such other ingredients do not interfere with the stability and jetability of the ink, which may be readily determined by routine experimentation. Such other ingredients are in a general sense well known in the art.

Biocides may be used to inhibit growth of microorganisms.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxyethylglycine (DHEG), trans-1,2- cyclohexanediaminetetraacetic acid (CyDTA), dethylenetriamine-N,N,N',N", N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

### Ink Properties

Jet velocity, separation length of the droplets, drop size and stream stability are greatly affected by the surface tension and the viscosity of the ink. Pigmented ink jet inks typically have a surface tension in the range of about 20 dyne/cm to about 70 dyne/cm at 25°C. Viscosity can be as high as 30 cP at 25°C, but is typically somewhat lower. The ink has physical properties compatible with a wide range of ejecting conditions, i.e., driving frequency of the piezo element, or ejection conditions for a thermal head, for either a drop-on-demand device or a continuous device, and the shape and size of the nozzle. The inks should have excellent storage stability for long periods so as not to clog to a significant extent in an ink jet apparatus. Further, the ink should not corrode parts of the ink jet printing device it comes in contact with, and it should be essentially odorless and non-toxic.

Although not restricted to any particular viscosity range or printhead, the inventive ink set is particularly suited to lower viscosity applications such as those required by thermal printheads. Thus the viscosity (at 25°C) of the inventive inks and fixer can be less than about 7 cP, is preferably less than about 5 cP, and most advantageously is less than about 3.5 cP. Thermal inkjet actuators rely on instantaneous heating/bubble formation to eject ink drops and this mechanism of drop formation generally requires inks of lower viscosity.

### Substrate

The instant invention is particularly advantageous for printing on plain paper, such as common electrophotographic copier paper and photo paper, glossy paper and similar papers used in inkjet printers.

### EXAMPLES

### Extent of Polyurethane Reaction

The extent of polyurethane reaction was determined by detecting NCO% by dibutylamine titration, a common method in urethane chemistry. In this method, a sample of the NCO containing pre-polymer is reacted with a known amount of dibutylamine solution and the residual amine is back titrated with HCl.

### Particle Size Measurements

The particle size for the polyurethane dispersions, pigments and the inks were determined by dynamic light scattering using a MICROTRAC UPA 150 analyzer from Honeywell/Microtrac (Montgomeryville PA).

This technique is based on the relationship between the velocity distribution of the particles and the particle size. Laser generated light is scattered from each particle and is Doppler shifted by the particle Brownian motion. The frequency difference between the shifted light and the unshifted light is amplified, digitalized and analyzed to recover the particle size distribution.

The reported numbers below are the volume average particle size.

### Solid Content Measurement

Solid content for the solvent free polyurethane dispersions was measured with a moisture analyzer, model MA50 from Sartorius. For polyurethane dispersions containing high boiling solvent, such as NMP, tetraethylene glycol dimethyl ether, the solid content was then determined by the weight differences before and after baking in 150°C oven for 180 minutes.

### MW characterization of the Polyurethane additive

All molecular weights were determined by GPC using poly (methyl methacrylate) standards with tetrahydrofuran as the elutent. Using statics derived by Flory, the molecular weight of the polyurethane may be calculated or predicted based on the NCO/OH ratio and the molecular weight of the monomers Molecular weight is also a characteristic of the polyurethane that can be used to define a polyurethane. The molecular weight is routinely reported as number average molecular weight, Mw. For the urea terminated polyurethanes ink additive the preferred molecular weight range is 2000 to 30000, or more preferable 3000 to 20000. For the crosslinked polyurethane ink additive, the preferred molecular weight is more than 30,000 as Mn. The polyurethane additives are not limited to Gaussian distribution of molecular weight, but may have other distributions such as bimodal distributions.

### Polyurethane Ink Additive Example 1 IPDI/T650/DMPA AN30

A 2L reactor was loaded with 154.3 g TERATHANE 650, 95.2 g tetraethylene glycol dimethyl ether, and 20.4 g dimethylol proprionic acid. The mixture was heated to 110°C with N₂ purge for 10 min. Then the reaction was cooled to 80°C, and 0.4 g dibutyltindilaurate was added. Over 30 minute's 96.0 g isophorone diisocyanate was added followed by 24.0 g tetraethylene glycol dimethyl ether. The reaction was held at 80°C for 2 hours when the % NCO was below 1.2%. Then, 10.6 g bis (2-methoxy ethyl) amine was added over 5 minutes. After 2 hours at 80°C, the polyurethane solution was inverted under high speed mixing by adding a mixture of 45% KOH (16.8 g) and 236 g water followed by additional 467 g water. The polyurethane dispersion had a viscosity of 11.4 cP, 25.3% solids, particle size of d50 = 22 nm and d95 = 35 nm, and molecular weight by GPC of Mn 6520, Mw 16000, and Pd 2.5. The urea content is 8.8 %.

### Polyurethane Ink Additive Example 2 IPDI/HD BMEA AN30

A 2L reactor was loaded with 70.9 1, 6-hexane diol, 55.3 g tetraethylene glycol dimethyl ether, and 21.5 g dimethylol proprionic acid. The mixture was heated to 110°C with N2 purge for 30 min. Then the reaction was cooled to 80°C, and 0.5 g dibutyl tin dilaurate was added. Over 30 minute's 185.8 g isophorone diisocyanate was added followed by 45.8 g tetraethylene glycol dimethyl ether. The reaction was held at 85°C for 2 hours when the % NCO was below 2.1%. Then, 20.3 g bis (2-methoxy ethyl) amine was added over 5 minutes. After 1 hr at 85°C, the polyurethane solution was inverted under high speed mixing by adding a mixture of 45% KOH (15.7 g) and 222 g water followed by additional 489 g water. The polyurethane dispersion had a viscosity of 9.9 cP, 25.3% solids, pH 8.0, particle size of d50 = 17 nm and d95 = 26 nm, and molecular weight by GPC of Mn 5611, Mw 10316, and PD 1.8. Urea content, 6.8 %.

### Polyurethane Ink Additive Example 3 IPDI/500 PO3G/DMPA AN30

The preparation was identical to Polyurethane Ink Additive Example 2 except that PO3G 500 was used instead of Terathane and the formulation was adjusted for molecular weight differences in order to maintain the same NCO/OH ratio. The polyurethane dispersion had a viscosity of 24.4% solids, 22.1 cP, particle size of d50 = nm and d95 = nm, and molecular weight by GPC of Mn 8170, Mw 18084, and Pd 2.21. The urea content is 4.2%.

### Polyurethane Ink Additive Example 4 IPDI/1500 PO3G/DMPA AN30

Polyurethane prepared according to Example 3 except PO3G 1500 was used in an equivalent amount.

### Polyurethane Ink Additive Example 5 TMXDI/500 PO3G/DMPA AN30

Polyurethane prepared according to Example 4 except m-tetramethylene xylylene diisocyanate (referred to hereafter as"TMXDI") instead of isophorone diisocyanate was used in an equivalent amount.

### Polyurethane Ink Additive Example 6 121PDI/15DHE T650 BMEA 45AN 90% KOH

A 2L reactor was loaded with 109.7g TERATHANE 650, 33.8 g tetraethylene glycol dimethyl ether, and 6.6 g Dantocol DHE (1, 3-dihydroxyethyl dimethyl hydantoin) and 27.0 g dimethylol proprionic acid. The mixture was heated to 75°Cwith N2 purge for 20 minutes. Then, 0.4 g dibutyl tin dilaurate was added. Over 60 minute's 96.6 g isophorone diisocyanate was added followed by 8.0 g tetraethylene glycol dimethyl ether. The reaction was held at 80°Cfor 4 hours when the corrected % NCO was below 1.5%. Then, 9.7 g bis (2-methoxy ethyl) amine was added over 5 minutes. After 1 hour at 80oC, the polyurethane solution was inverted under high speed mixing by adding a mixture of 45% KOH (22.6 g) and 317 g water followed by additional 372 g water. The polyurethane dispersion had a viscosity of 35 cP, 25.4 % solids, and a particle size of d50 = 22.5 nm and d95 = 26.6 nm. The urea content is 3.9 %.

### Polyurethane Ink Additive Example 7 IPDI/T650/DMPA AN45

Polyurethane prepared according to Example 1 except the NCO/OH ratio was 1.077 and DMPA level was adjusted to yield a polyurethane having a 45 AN (mg KOH/g solids). The polyurethane dispersion had a viscosity of 25.0 cP, 25.5% solids, particle size of d50 = 11 nm and d95 = 27 nm, and molecular weight by GPC of Mn 13255 and Pd 2.5. The urea content is 8.8 %.

### Comparative Additive Polymer 1 ETEGMA//BZMA//MAA 3.6//13.6//10.8

The following is an example of how to make a block polymer that has both ionic as well as steric stabilization.

A 3-liter flask was equipped with a mechanical stirrer, thermometer, N₂ inlet, drying tube outlet, and addition funnels. Tetrahydrofuran THF, 291.3 gm, was charged to the flask. The catalyst tetrabutyl ammonium m-chlorobenzoate, 0.44 ml of a 1.0 M solution in acetonitrile, was then added. Initiator, 1, 1-bis (trimethylsiloxy)-2-methyl propene, 20.46 gm (0.0882 moles) was injected. Feed I [tetrabutyl ammonium m-chlorobenzoate, 0.33 ml of a 1.0 M solution in acetonitrile and THF, 16.92 gm] was started and added over 185 minutes. Feed II [trimethylsilyl methacrylate, 152.00 gm (0.962 moles)] was started at 0.0 minutes and added over 45 minutes. One hundred and eighty minutes after Feed II was completed (over 99 % of the monomers had reacted) Feed III [benzyl methacrylate, 211.63 gm (1.20 moles) was started and added over 30 minutes. Forty minutes after Feed III was completed (over 99 % of the monomers had reacted) Feed IV [ethoxytriethyleneglycol methacrylate, 78.9 gm (0.321 moles) was started and added over 30 minutes.

At 400 minutes, 73.0 gm of methanol and 111.0 gm of 2-pyrrolidone was added to the above solution and distillation began. During the first stage of distillation, 352.0 gm of material was removed. Then more 2-pyrrolidone 340.3 gm was added and an additional 81.0 gm of material was distilled out. Finally, 2-pyrrolidone, 86.9 gm total, was added. The final polymer was at 40.0% solids.

The polymer has a composition of ETEGMA//BZMA//MAA 3.6//13.6//10.8. It has a molecular weight of Mn = 4,200, acid value 2.90.

### Self-Dispersed Black Pigment

The Self Dispersed Pigment 1 was prepared by methods described in previously referred to US 6,852,156 Example 3.

The Self Dispersed Pigment 2 was a Cabojet 300 from Cabot from the Cabot Corporation, Boston Massachusetts.

### Printing of Test ink Samples

The printing of the test examples was done in the following manner unless otherwise indicated. The printing for the Self Dispersed Pigments inks was done on a piezo Epson 980 printer (Epson America Inc, Long Beach, Calif.) using the black printhead which has a nominal resolution of 720 dots per inch for plain paper and 1440 dpi for the glossy paper. The printing was done in the software-selected standard print mode. Printing in the normal mode was assigned a 100 % coverage. For 80 % coverage prints the printer was set for 80 % coverage. The coverage that an inkjet printer puts down on a substrate is usually controlled by the printer software and can be set in the printer settings. A 100 % setting means that the inkjet printer fires enough dots to cover at least 100 % of an area. This usually means that the dots spread and overlap each other. When an 80 % coverage is set in the controller likely 20 % fewer dots are put down by the printer in a given area. This can lead to parts of the substrate with no ink on it. OD, Gloss and Distinctness of Image are negatively impacted at 80 % coverage. Printing tests were also done with a thermal ink jet printer, an HP6122. The optical density and chroma were measured using a Greytag-Macbeth SpectoEye instrument (Greytag-Macbeth AG, Regensdorf, Switzerland). Plain paper Optical Density values are the average of readings from prints made on three different plain papers: Hammermill Copy Plus paper, Hewlett-Packard Office paper and Xerox 4024 paper. The glossy paper results are from prints made using Epson Glossy Photo Paper, SO41286. Also printed was SO41062 is Epson Photo Quality Inkjet Paper (Matte Paper). Gloss was measured using a BYK-Gardner Micro-Tri-Gloss gloss meter (Gardner Co., Pompano Beach, Florida). An angle of 60° was chosen to maximize the gloss reading. Inks prepared using the Self Dispersed Pigments were printed and the optical properties measured. DOI was measured on a BYK-Gardner Wave Scan DOI.

### Preparation of Inks with SDP and Polyurethane Ink Additives

The inventive inks were made by adding the following components to the pigment dispersion in a manner similar to Comparative Ink Examples noted above except Polyurethane Ink Additives were added. All amounts shown are in weight percent. Water makes up the balance of the ink.

| | |
|---|---|
| Pigment | 3 to 6 % |
| Polyurethane additive | 1 to 3 % |
| 1,2-hexanediol | 4 % |
| Glycerol | 10 % |
| Surfynol 465 | 0.65% |
| 2-pyrrolidinone | 3 % |
| Proxel | 0.25 % |
| Water added | (Balance to 100%) |

Each of the ink shown in Tables 1-2 were printed and the optical properties measured. The 100 % and 80 % labeling on the gloss and DOI data are for 100 % and 80 % coverage respectfully. The gloss was measured at a 60° angle. For Table 1 the pigment concentration was 3 %. PUD corresponds to the polyurethane binder additive listed above.

**Table 1 Inventive Inks: SDP plus Polyurethane Additives**

| | Binder | % Binder | Optical Density | | Gloss; Coverage | |
|---|---|---|---|---|---|---|
| | | | | | 100% | 80% |
| Paper used | | | Xerox 4024 | EPPG | | |
| SDP Ex 1 | None | 0% | 1.02 | 1.92 | 34.2 | 42.5 |
| SDP Ex 2 | None | 0% | 1.07 | 1.91 | 21.6 | 39.9 |
| SDP Ex 1 | PUD Add 2 | 1% | 1.02 | 1.96 | 48.2 | 49 |
| SDP Ex 2 | PUD Add 1 | 1% | 1.03 | 1.95 | 29.7 | 44.6 |
| SDP Ex 2 | PUD Add 2 | 1% | 1.07 | 2.04 | 39.5 | 47.9 |
| SDP Ex 1 | PUD Add 1 | 3% | 0.98 | 1.77 | 69.5 | 54.9 |
| SDP Ex 1 | PUD Add 2 | 3% | 0.99 | 1.84 | 79.4 | 59.5 |
| SDP Ex 2 | PUD Add 1 | 3% | 102 | 1.76 | 47.8 | 48.6 |
| SDP Ex 2 | PUD Add 2 | 3% | 1.05 | 1.88 | 75.5 | 61.7 |

| | | | | | | |
|---|---|---|---|---|---|---|
| All prints were printed on Epson 930 printer. Plain paper @ 720dpi and glossy paper @ 1440 dpi, from the correct color slot. | | | | | | |

The SDP for examples in Table 2 is SDP example 1. The print coverage for Table 2 is 100 % with three different papers: Hammermill CopyPlus(HCP), Xerox and Epson Glossy Photo Paper (EPGG). The gloss was measured at 60°

**Table 2 Inventive Inks: SDP plus Polyurethane Additives**

| | Optical Density | | Gloss | Optical Density | DOI |
|---|---|---|---|---|---|
| SDP /Paper | HCP | Xerox | EPPG | | |
| SDP CONTROL | 0.97 | 0.96 | 32.7 | 2.01 | DULL |
| SDP plus PUD Additive Ex 3 | 1 | 0.93 | 48.6 | 2.01 | 1.1 |
| SDP plus PUD Additive Ex 4 | 0.97 | 0.96 | 45.3 | 2.02 | 1 |
| SDP plus PUD Additive Ex 5 | 0.95 | 1.03 | 45.2 | 1.97 | 1 |
| SDP plus PUD Additive Ex 1 | 0.96 | 0.96 | 47.1 | 2 | 1.1 |

Comparative inks were prepared as well with similar formulations and printed. The results are reported in Table 3 below.

**Table 3 Comparative Inks: SDP plus Acrylic Additives**

| | % pigment | Polymer | Optical | Optical |
|---|---|---|---|---|
| | | | Density | Density |
| | | | HCP | Xerox |
| | 1.50% | None | 0.74 | 0.75 |
| SDP | 3.00% | None | 0.95 | 1.02 |
| SDP | 4.50% | None | 1.05 | 1.15 |
| SDP | 6.00% | None | 1.16 | 1.23 |
| SDP plus | 1.50% | Comp Add Polymer 1 | 0.73 | 0.76 |
| SDP plus | 3.00% | Comp Add Polymer 1 | 0.92 | 0.96 |
| SDP plus | 4.50% | Comp Add Polymer 1 | 1.05 | 1.08 |
| SDP plus | 6.00% | Comp Add Polymer 1 | 1.14 | 1.13 |

The inventive inks with polyurethanes provide superior print properties when compared to SDPs with acrylic polymer additives, especially relative to the Gloss and Distinctness of Image.

## Claims

1. An aqueous inkjet ink composition comprising:
(a) a self dispersed pigment;
(b) an aqueous vehicle; and
(c) urea terminated polyurethanes derived from alpha-omega diols and/or polyether diols comprising at least one compound of general Structure (I) 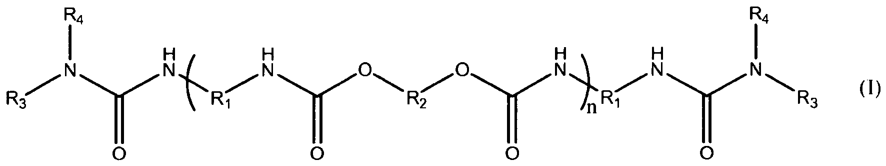 R₁ is alkyl, substituted alkyl, substituted alkyl/aryl from a diisocyanate,
R₂ is alkyl, substituted/branched alkyl from a diol,
R₃ is alkyl, a non-isocyanate reactive substituted, or branched alkyl from the amine terminating group;
R₄ is hydrogen, alkyl, a non-isocyanate reactive substituted, or branched alkyl from the amine terminating group;
n is 2 to 30;
and where R₂ is Z₁ or Z₂ and at least one Z₁ and at least one Z₂ must be present in the polyurethane composition; 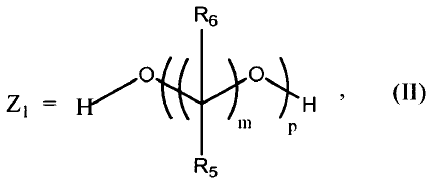 p is greater than or equal to 1,
when p is 1, m is greater than or equal to 3 to about 30,
when p is 2 or greater, m is greater than or equal to 3 to about 12;
R₅, R₆ each is independently selected from the group consisting of hydrogen, alkyl, substituted alkyl, and aryl; where the R₅ is the same or different for substituted methylene group where the R₅ and R₅ or R₆ can be joined to form a cyclic structure;
Z₂ is a diol substituted with an ionic group;
wherein the urea content of the urea terminated polyurethanes ink additive is at least 2 wt % of the polyurethane.

2. The ink jet ink of claim 1, wherein the urea terminated polyurethanes comprises the diol Structure (II), wherein p is 1, and wherein m is 3 to 30.

3. The ink jet ink of claim 1, wherein the urea terminated polyurethanes comprises the diol of Structure (II), where p is 2 or greater, and wherein m is 3 to 12.

4. The ink jet ink of claim 1, wherein the urea terminated polyurethanes is from 0.1 to 12 %, by weight based on the weight of the total ink composition.

5. The ink jet ink of claim 1, wherein the urea terminated polyurethanes has a urea content of the urea terminated polyurethanes ink additive is at least 2.5 wt % of the polyurethane and at most 10.5 wt. %.

6. The ink jet ink of claim 1, having from 0.1 to 10 wt% pigment based on the total weight of the ink, a surface tension in the range of 20 dyne/cm to 70 dyne/cm at 25°C, and a viscosity of lower than 30 cP at 25°C.

7. The ink jet ink of claim 1, where the self dispersed pigment comprises anionic dispersing groups.

8. The ink jet ink of claim 7, where the self dispersed pigment comprises a degree of functionalization of less than 3.5 µmoles per square meter of pigment surface (3.5 µmol/m2).

9. The ink jet ink of claim 8, wherein the self dispersed pigment comprises a degree of functionalization of less than 3.0 µmoles per square meter of pigment surface (3.0 µmol/m2).

10. An inkjet ink set wherein at least one of the inks in the set is an ink of claim 1.

## Patentansprüche

1. Wässrige Tintenstrahltintenzusammensetzung umfassend:
(a) ein selbstdispergiertes Pigment;
(b) ein wässriges Vehikel; und
(c) harnstoffterminierte Polyurethane, die von Alpha-omega-Diolen und/oder Polyetherdiolen abgeleitet sind und mindestens eine Verbindung der allgemeinen Struktur (I) 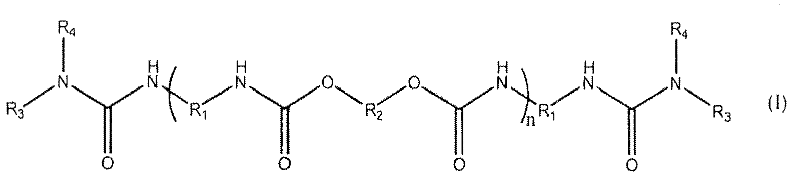 umfassen
wobei R₁ Alkyl, substituiertes Alkyl, substituiertes Alkyl/Aryl von einem Diisocyanat ist,
R₂ Alkyl, substituiertes/verzweigtes Alkyl von einem Diol ist,
R₃ Alkyl, ein nicht isocyanatreaktives, substituiertes oder verzweigtes Alkyl von der aminterminierenden Gruppe ist;
R₄ Wasserstoff, Alkyl, ein nicht isocyanatreaktives, substituiertes oder verzweigtes Alkyl von der aminterminierenden Gruppe ist;
n 2 bis 30 beträgt;
und wobei R₂ Z₁ oder Z₂ ist und mindestens ein Z₁ und mindestens ein Z₂ in der
Polyurethanzusammensetzung vorliegen muss; 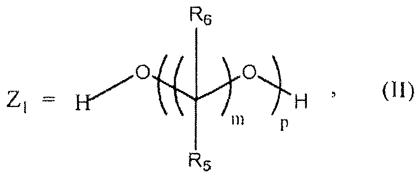 p höher als oder gleich 1 ist,
wenn p 1 beträgt, m höher als oder gleich 3 bis etwa 30 ist,
wenn p 2 oder mehr beträgt, m höher als oder gleich 3 bis etwa 12 ist;
R₅, R₆ jeweils unabhängig aus der Gruppe ausgewählt sind bestehend aus Wasserstoff, Alkyl, substituiertem Alkyl und Aryl; wobei das R₅ bei der substituierten Methylengruppe gleich oder verschieden ist, wobei die R₅ und R₅ oder R₆ verknüpft sein können, um ein cyclische Struktur zu bilden;
Z₂ ein mit einer ionischen Gruppe substituiertes Diol ist;
wobei der Harnstoffgehalt des harnstoffterminierten PolyurethanTintenzusatzmittels mindestens 2 Gew.-% des Polyurethan beträgt.

2. Tintenstrahltinte nach Anspruch 1, wobei die harnstoffterminierten Polyurethane die Diolstruktur (II) umfassen, wobei p 1 beträgt und wobei m 3 bis 30 beträgt.

3. Tintenstrahltinte nach Anspruch 1, wobei die harnstoffterminierten Polyurethane das Diol der Struktur (II) umfassen, wobei p 2 oder mehr beträgt und wobei m 3 bis 12 beträgt.

4. Tintenstrahltinte nach Anspruch 1, wobei die harnstoffterminierten Polyurethane 0,1 bis 12 Gew.-%, auf der Basis des Gewichts der gesamten Tintenzusammensetzung, betragen.

5. Tintenstrahltinte nach Anspruch 1, wobei die harnstoffterminierten Polyurethane einen Urethangehalt des harnstoffterminierten Polyurethantintenzusatzmittels von mindestens 2,5 Gew.-% und höchstens 10,5 Gew.-%, auf das Polyurethan bezogen, aufweisen.

6. Tintenstrahltinte nach Anspruch 1, die 0,1 bis 10 Gew.-% Pigment, auf der Basis des Gesamtgewichts der Tinte, eine Oberflächenspannung im Bereich von 20 dyn/cm bis 70 Dyn/cm bei 25 °C und eine Viskosität von weniger als 30 cP bei 25 °C aufweist.

7. Tintenstrahltinte nach Anspruch 1, wobei das selbstdispergierte Pigment anionische dispergierende Gruppen umfasst.

8. Tintenstrahltinte nach Anspruch 7, wobei das selbstdispergierte Pigment einen Funktionalisierungsgrad von weniger als 3,5 µMol pro Quadratmeter Pigmentoberfläche (3,5 µMol/m2) umfasst.

9. Tintenstrahltinte nach Anspruch 8, wobei das selbstdispergierte Pigment einen Funktionalisierungsgrad von weniger als 3,0 µMol pro Quadratmeter Pigmentoberfläche (3,0 µMol/m2) umfasst.

10. Tintenstrahltintensatz, wobei mindestens eine der Tinten in dem Satz eine Tinte nach Anspruch 1 ist.

## Revendications

1. Composition aqueuse d'encre pour jet d'encre comprenant :
(a) un pigment auto dispersé ;
(b) un véhicule aqueux ; et
(c) des polyuréthanes terminés par de l'urée dérivés de diols alpha-oméga et/ou de polyéthers diols comprenant au moins un composé de structure générale (I) 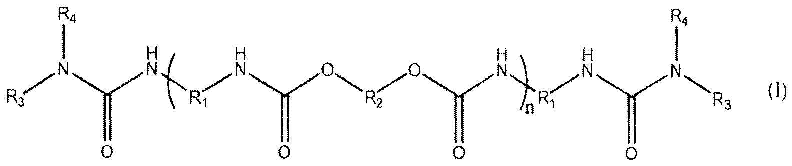 R₁ est un groupe alkyle, alkyle substitué, alkyle/aryle substitué provenant d'un diisocyanate,
R₂ est un groupe alkyle, alkyle substitué/ramifié provenant d'un diol
R₃ est un groupe alkyle, un groupe alkyle non-isocyanate réactif substitué, ou ramifié provenant du groupe de terminaison amine
R₄ est un atome d'hydrogène, un groupe alkyle, un groupe alkyle non-isocyanate réactif substitué ou ramifié provenant du groupe de terminaison amine ;
n vaut 2 à 30 ;
et où R₂ est Z₁ ou Z₂ et au moins un Z₁ et au moins un Z₂ doivent être présents dans la composition polyuréthane ; 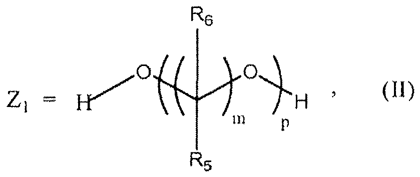 p est supérieur ou égal à 1,
lorsque p est égal à 1, m est supérieur ou égal à 3 jusqu'à environ 30,
lorsque p a la valeur de 2 ou supérieur, m est supérieur ou égal à 3 jusqu'à environ 12;
chaque R₅, R₆ est indépendamment choisi parmi le groupe constitué d'un atome d'hydrogène, d'un groupe alkyle, alkyle substitué et aryle ; où le R₅ est identique ou différent du groupe méthylène substitué lorsque le R₅ et R₅ ou R₆ peuvent être joints pour former une structure cyclique ;
Z₂ est un diol substitué par un groupe ionique
dans laquelle la teneur en urée de l'additif pour encre de polyuréthanes terminés par de l'urée est d'au moins 2 % en pds du polyuréthane.

2. Encre pour jet d'encre selon la revendication 1, dans laquelle les polyuréthanes terminés par de l'urée comprennent le diol de la structure (II), dans laquelle p vaut 1, et dans laquelle m vaut 3 à 30.

3. Encre pour jet d'encre selon la revendication 1, dans laquelle les polyuréthanes terminés par de l'urée comprennent le diol de la structure (II), où p a la valeur de 2 ou supérieur et dans laquelle m a la valeur de 3 à 12.

4. Encre pour jet d'encre selon la revendication 1, dans laquelle les polyuréthanes terminés par de l'urée sont d'environ 0,1 à 12 % en poids basé sur le poids de la composition totale de l'encre.

5. Encre pour jet d'encre selon la revendication 1, dans laquelle les polyuréthanes terminés par de l'urée ont une teneur en urée de l'additif d'encre de polyuréthanes terminés par de l'urée d'au moins 2,5 % en poids du polyuréthane et d'au plus 10,5 % en poids du polyuréthane.

6. Encre pour jet d'encre selon la revendication 1, ayant de 0,1 à 10 % en poids de pigment basé sur le poids total de l'encre, une tension superficielle située dans la plage de 20 dyne/cm jusqu'à 70 dyne/cm à 25°C, et une viscosité inférieure à 30 centipoises à 25°C.

7. Encre pour jet d'encre selon la revendication 1, dans laquelle le pigment auto dispersé comprend des groupes de dispersion anionique.

8. Encre pour jet d'encre selon la revendication 7, dans laquelle le pigment auto dispersé comprend un degré de fonctionnalisation inférieur à 3,5 µmoles par mètre carré de surface de pigment (3,5 µmol/m2).

9. Encre pour jet d'encre selon la revendication 8, dans laquelle le pigment auto dispersé comprend un degré de fonctionnalisation inférieur à 3,0 µmoles par mètre carré de surface de pigment (3,0 µmol/m2).

10. Ensemble d'encres pour jet d'encre dans lequel au moins l'une des encres dans l'ensemble est une encre selon la revendication 1.
